# EUROPÄISCHE PATENTSCHRIFT

(11) **EP 1 140 459 B1**
(45) Veröffentlichungstag und Bekanntmachung des Hinweises auf die Patenterteilung: **05.02.2003**
(21) Anmeldenummer: 99964418.0
(22) Anmeldetag: 06.12.1999
(51) Int. Cl.: B29C 47/02, B29B 15/10, B29C 47/10

(54) **VERFAHREN ZUR HERSTELLUNG EINES COMPOUNDS AUS EINEM FLIESSFÄHIGEN KUNSTSTOFF UND EINER FESTEN FASEREINLAGE DURCH EXTRUDIEREN UND VORRICHTUNG ZUR DURCHFÜHRUNG DES VERFAHRENS**
METHOD FOR PRODUCING A COMPOUND FROM A FLOWABLE PLASTIC MATERIAL AND A SOLID FIBER CORE BY MEANS OF EXTRUSION AND DEVICE FOR CARRYING OUT SAID METHOD
PROCEDE DE FABRICATION D'UNE MATIERE COMPOSITE A L'AIDE DE PLASTIQUE FLUIDE ET D'UNE AME SOLIDE DE FIBRES PAR EXTRUSION ET DISPOSITIF PERMETTANT DE METTRE EN OEUVRE LEDIT PROCEDE

(30) Priorität: 22.12.1998 DE 19860550
(43) Veröffentlichungstag der Anmeldung: 10.10.2001
(73) Patentinhaber: Berstorff GmbH, 30625 Hannover (DE)
(72) Erfinder: CHSZANIECKI, Siegfried, D-30171 Hannover (DE)
(74) Vertreter: Meissner, Peter E., Dipl.-Ing.
(86) Internationale Anmeldenummer: DE9903949
(87) Internationale Veröffentlichungsnummer: WO00037234

(56) Entgegenhaltungen:
- EP-A- 0 287 427
- EP-A- 0 619 170
- DE-A- 1 953 020
- US-A- 5 110 275

## Beschreibung

Die Erfindung betrifft ein Verfahren zur Herstellung eines Compounds aus einem fließfähigen Kunststoff und einer festen Fasereinlage gemäß dem Gattungsbegriff des Patentanspruchs 1. Ferner betrifft die Erfindung eine Vorrichtung zur Durchführung dieses Verfahrens.

Aus der DE 195 30 020 A1 ist ein Verfahren zur Herstellung eines Compounds aus einem Kunststoff und einer festen Fasereinlage bekannt, bei dem ein beheizter Schneckenextruder eingesetzt wird, in den Endlosfasern durch Selbsteinzug eingezogen, dort zerschnitten und mit dem Kunststoff vermischt werden, so daß anschließend ein fertiges Fasercompound abgeführt werden kann. Um die Länge der für eine intensive Vermischung mit dem fließfähigen Kunststoff im Extruder erforderliche Mischstrecke möglichst kurz halten zu können, ist bei diesem Verfahren vorgesehen, daß die Endlosfasern vor dem Eintritt in den Extruder in einem Tränkwerkzeug mit dem verwendeten Kunststoff benetzt werden.

Hinsichtlich des Tränkwerkzeugs wird auf ein handelsübliches Gerät verwiesen, das in der EP 0 287 427 B1 beschrieben ist. Dieses bekannte Gerät zur Benetzung von endlosem Fasermaterial ist in Form eines Spritzwerkzeugs ausgebildet, welches einen durchgehenden Kanal für die Durchleitung des Fasermaterials aufweist. Im Anfangsbereich dieses Kanals enden zwei Strömungskanäle für die Zuführung von fließfähigem Kunststoff zu dem Endlosfasermaterial. In l.ängsrichtung verläuft der Kanal nicht geradlinig, sondern weist mehrere nach unten oder oben verlaufende Knicke auf, so daß das Fasermaterial bei seiner Durchleitung jeweils um entsprechende Kanten umgelenkt wird. Hierdurch soll eine möglichst gleichmäßige und vollständige Benetzung des Fasermaterials sichergestellt werden.

Die Schrift US 5,110,275 offenbart einen Extruder zur Herstellung eines Compounds aus einem fließfähigen Kunststoff und einer festen Fasereinlage aus einem Verstärkungsmaterial, insbesondere Glasfasern, durch Extrudieren des Kunststoffs aus einem Extrusionsraum heraus, bei dem dem Kunststoff im Extrusionsraum Endlosfasern des Verstärkungsmaterials, die zuvor bereits mit dem Kunststoff benetzt worden sind, zugeführt und die Endlosfasem mit dem Kunststoff im Extrusionsraum vermischt werden.

Aufgabe der vorliegenden Erfindung ist es, ein gattungsgemäßes Verfahren dahingehend weiterzubilden, daß eine gleichmäßige und vollständige Benetzung des Fasermaterials auf eine möglichst einfache Weise sichergestellt wird. Dabei soll ein Compound herstellbar sein, das gezielt einen besonders hohen Anteil an sehr langen Fasern enthält, um eine hohe Bruchfestigkeit bei den aus diesem Compound herstellbaren Fertigteilen zu gewährleisten. Ferner soll eine Vorrichtung zur Durchführung dieses Verfahrens angegeben werden.

Gelöst wird diese Aufgabe erfindungsgemäß hinsichtlich des Verfahrens mit den im Patentanspruch 1 angegebenen Merkmalen. Die Vorrichtung zur Durchführung dieses Verfahrens ist durch die im Patentanspruch 8 angegebenen Merkmale gekennzeichnet. Vorteilhafte Weiterbildungen der Erfindung sind in den abhängigen Ansprüchen angegeben.

Die Erfindung geht davon aus, daß die Herstellung eines Compounds aus einem fließfähigen thermoplastischen Kunststoff und einer festen Fasereinlage aus einem Verstärkungsmaterial durch Extrudieren der eingesetzten Werkstoffe aus einem Extrusionsraum heraus erfolgt. Bei dem fließfähigen Kunststoff kann es sich grundsätzlich auch um duroplastische Flüssigkunststoffe wie etwa Polyesterharze handeln. Vorzugsweise werden jedoch thermoplastische Kunststoffe eingesetzt, die im Extrusionsraum durch Wärmezufuhr plastifiziert werden, beispielsweise Polyethylen oder Polypropylen. Als Fasermaterial zur Verstärkung des im Sinne eines Matrixwerkstoffs verwendeten fließfähigen Kunststoffs können beliebige Werkstoffe verwendet werden. Vorzugsweise handelt es sich dabei um Glasfasern. Das faserförmige Verstärkungsmaterial wird in Form von Endlosfasern dem im Extrusionsraum befindlichen und bereits fließfähigen Kunststoff zugeführt und mit diesem vermischt. Vor der Einführung der Endlosfasern in den Extrusionsraum werden diese mit einer im Vergleich zur Kunststoffmenge im Extruder geringen Menge des vorgesehenen fließfähigen Kunststoffs benetzt. Durch diese vorherige Benetzung ist es möglich, die Mischarbeit im Extruder zur Erzielung einer möglichst gleichmäßigen Verteilung der Fasern im Matrixwerkstoff auf ein Minimum zu beschränken. Dadurch können die zugeführten Fasern, die unter der Einwirkung des verwendeten

Mischwerkzeugs zum Brechen oder Reißen neigen, eine vergleichsweise große Länge behalten. Je länger und intensiver die Mischarbeit ausgeführt wird, um so kürzer werden die einzelnen Faserstücke. Damit die aus dem erfindungsgemäß hergestellten Compound durch Weiterverarbeitung erzeugten Produkte eine möglichst hohe Bruchfestigkeit erreichen, ist es jedoch wichtig, daß die Faserlänge möglichst lang bleibt. Ohne eine ausreichende Benetzung der zugeführten Endlosfasern müßte eine wesentlich längere Mischtätigkeit durchgeführt werden.

Zur Erzielung einer vollständigen Benetzung der Endlosfasern mit dem fließfähigen Kunststoff sieht die Erfindung vor, daß die Endlosfasern durch einen Walzenspalt geführt werden, der zwischen einem Paar in gegenläufigem Drehsinnn angetriebener Benetzungswalzen gebildet ist. Dabei weist die Oberfläche dieser Vernetzungswalzen eine Beschichtung aus dem Kunststoff des Matrixwerkstoffs in fließfähiger Form in einer Dicke auf, die zur ständigen Füllung des Walzenspaltes mit dem Kunststoff ausreicht. Durch die Hindurchführung der Endlosfasem durch den Walzenspalt werden die Endlosfasern zwangsweise in einen äußerst intensiven Kontakt mit dem fließfähigen Kunststoff gebracht und so auf sehr wenig aufwendige Weise an ihrer Oberfläche vollständig mit dem Kunststoff benetzt.

Grundsätzlich ist es möglich, den fließfähigen Kunststoff zur Beschichtung der Benetzungswalzen mit einem separaten Extruder zu erzeugen und der Oberfläche der Benetzungswalzen zuzuführen. Besonders vorteilhaft ist es jedoch, den hierfür benötigten fließfähigen Kunststoff dem für die Vermischung mit den Endlosfasern verwendeten Extrusionsraum an einer Stelle als Teilstrom zu entnehmen, an der der Kunststoff bereits fließfähig ist, aber noch nicht mit den Fasern vermischt ist.

Für die Herstellung des Compounds eignen sich aufgrund ihrer besonders guten Vermischungseigenschaften in besonderer Weise Mehrschneckenextruder, vorzugsweise Doppelschneckenextruder. Grundsätzlich sind aber auch Einschneckenextruder einsetzbar. Zweckmäßigerweise erfolgt die Zuführung der benetzten Endlosfasern im Bereich der Mischzone eines solchen Extruders. Diese Mischzone braucht für eine ausreichende Vermischung mit dem Matrixwerkstoff nur eine vergleichsweise kurze Länge aufzuweisen.

Um eine besonders gute Benetzung der Endlosfasem zu erreichen, empfiehlt es sich, die Benetzungswalzen jeweils mit voneinander verschiedenen Walzenumfangsgeschwindigkeiten zu betreiben. Auf diese Weise kommt es im Walzenspalt zu einer Friktion, die zu einem Aufspleißen des Fasermaterials führt. Hierdurch können die einzelnen Fasern des zugeführten Faserstranges in einen besonders intensiven Berührungskontakt mit dem fließfähigen Kunststoff im Walzenspalt gebracht und vollständig umhüllt werden. Durch das Aufspleißen gelingt es, etwa durch "coating" zusammenklebende Fasern aufzuschließen und eine Benetzung der "Einzelfasern" zu erreichen. Unterschiedliche Walzenumfangsgeschwindigkeiten lassen sich z.B. bei gleicher Antriebsdrehzahl durch Wahl entsprechend unterschiedlicher Walzendurchmesser erzielen. Vorzugsweise werden die Walzenumfangsgeschwindigkeiten jedoch durch entsprechende Einstellung und Regelung unterschiedlicher Drehzahlen der Benetzungswalzen realisiert.

Um eine geordnete Zufuhr der Endlosfasern zu den Benetzungswalzen zu gewährleisten empfiehlt es sich, die Endlosfasern zunächst über ein Paar aufeinander abrollender Einzugswalzen zu führen und von diesen aus in den Walzenspalt der Benetzungswalzen hineinzugeben. Die Einzugswalzen drehen sich ebenso wie die Benetzungswalzen jeweils gegensinnig zu einander, um den Materialtransport in die gewünschte Richtung zu erreichen.

Die erfindungsgemäße Vorrichtung zur Durchführung des vorstehend geschilderten Verfahrens weist als wesentlichen Teil einen Schneckenextruder auf, dessen von einem Extrudergehäuse umgebener Extrusionsraum außer den beiden Öffnungen für den Eintritt des Kunststoff des Matrixwerkstoffs und der Austrittsöffnung für das extrudierte Material eine weitere seitliche Öffnung aufweist, die der Zufuhr des endlosen Fasermaterials dient. Die Öffnung für das Fasermaterial liegt also zwischen der Eintritts- und der Austrittsöffnung für den Kunststoff, und zwar im Regelfall deutlich näher an der Austrittsöffnung. Ein weiterer wichtiger Teil der Vorrichtung besteht in der Benetzungseinrichtung für das Fasermaterial. Der Ausgang dieser Benetzungseinrichtung steht dabei in Transportverbindung mit der Öffnung für das endlose Fasermaterial im Extrudergehäuse. Erfindungsgemäß weist diese Benetzungseinrichtung mindestens ein Paar zusammenwirkender Benetzungwalzen auf, die gegensinnig drehend angetrieben sind. Prinzipiell ist es auch möglich, mehrere Paare derartiger Benetzungswalzen hintereinander oder nebeneinander zu schalten. im allgemeinen ist es jedoch sinnvoll, sich auf ein einziges Paar Benetzungswalzen zu beschränken. Der zwischen den Benetzungswalzen bestehende Walzenspalt bildet den Ausgang der Benetzungseinrichtung. Im Bereich der Peripherie der Benetzungswalzen, d.h. in der Umgebung von deren Umfang ist eine Zuführung für den zur Benetzung benötigten fließfähigen Kunststoff in der Weise angeordnet, daß der Mantel der Benetzungswalzen während des Betriebs ständig mit dem fließfähigen Kunststoff beschichtet wird.

Es empfiehlt sich im Interesse einer kompakten Bauweise, die Benetzungswalzen in einem umschließenden Gehäuse zu lagern, das fest mit dem Extrudergehäuse verbunden ist. Das bedeutet also, daß dieses Gehäuse im Bereich der seitlichen Öffnung für die Zufuhr des Fasermaterials angeordnet ist. Zweckmäßigerweise wird die seitliche Öffnung im Bereich der Mischzone des Schneckenextruders vorgesehen. Vorzugsweise ist vor dem Gehäuse, in dem die Benetzungswalzen gelagert sind, auch ein Paar gegensinnig drehend angetriebener Einzugswalzen angeordnet, über die die Endlosfasern des Fasermaterials kontrolliert in den Walzenspalt der Benetzungswalzen führbar sind.

Grundsätzlich kann der Schneckenextruder eine einzige Schnecke im Extrusionsraum aufweisen. Eine bessere Vermischung wird jedoch auf Mehrschneckenextrudern erreicht. Besonders bevorzugt ist der Einsatz von Doppelschneckenextrudern, wobei die Schnecken des Doppelschneckenextruders vorteilhafterweise gleichsinnig drehend angetrieben sind.

Um im Walzenspalt eine Friktion zur Unterstützung einer vollständigen Benetzung des Fasermaterials zu erzeugen, können grundsätzlich Benetzungswalzen mit unterschiedlichen Durchmessern eingesetzt werden, so daß diese mit gleicher Drehzahl angetrieben werden können, obwohl unterschiedliche Umfangsgeschwindigkeiten am Walzenmantel gewünscht werden. Selbstverständlich ist es auch möglich, bei untereinander gleichem Durchmesser der Benetzungswalzen gewünschte unterschiedliche Walzenumfangsgeschwindigkeiten durch eine unterschiedliche Getriebeübersetzung im Antrieb der einzelnen Walzen zu erreichen. Es empfiehlt sich, die Drehantriebe der Benetzungswalzen so auszulegen, daß deren Umfangsgeschwindigkeit unabhängig voneinander einstellbar und regelbar ist. Dies läßt sich am einfachsten dadurch erreichen, daß die Drehantriebe der Benetzungswalzen jeweils völlig separat voneinander ausgebildet sind.

Im Hinblick auf die Zuführung für den fließfähigen Kunststoff zu den Benetzungswalzen wird es als vorteilhaft angesehen, diese Zuführungen jeweils als Zweigkanal auszubilden, der in Transportrichtung der Schnecken des Schneckenextruders vor der Öffnung für die Zuführung des Fasermaterials aus dem Extrusionsraum abzweigt und im unmittelbaren Nahbereich des Mantels der jeweils zugeordneten Benetzungswalze offen endet, so daß in Folge des durch die Schnecke bzw. Schnecken bewirkten Drucks im fließfähigen Kunststoff ein Teilstrom dieses Kunststoffs durch den Zweigkanal auf den Mantel der Benetzungswalzen aufgetragen wird.

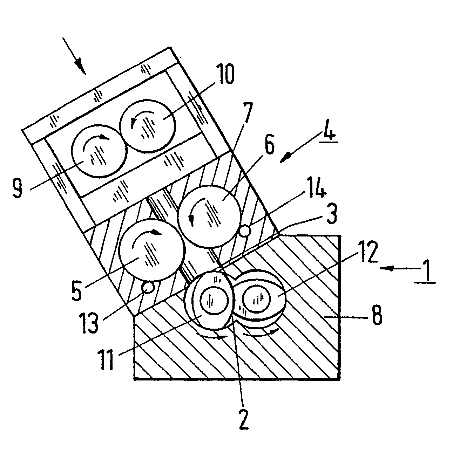

Nachfolgend wird die Erfindung anhand des in der einzigen Figur als Querschnitt schematisch dargestellten Ausführungsbeispiels näher erläutert.

Die Figur zeigt im Querschnitt einen Schneckenextruder 1, der als Doppelschneckenextruder mit den beiden Schnecken 11 und 12 ausgebildet ist. Wie durch die beiden eingetragenen Drehpfeile angezeigt ist, werden die beiden Schnecken 11, 12 in bevorzugter Weise gleichlaufend drehend angetrieben. Der Extrusionsraum des Schneckenextruders ist mit dem Bezugszeichen 2 bezeichnet, während das Extrudergehäuse das Bezugszeichen 8 trägt. Im Bereich der Mischzone des Schneckenextruders 1 weist das Extrudergehäuse 8 eine seitliche Öffnung 3 zum Extrusionsraum 2 hin auf. Über dieser Öffnung 3 ist ein Gehäuse 7 angeordnet, das unmittelbar fest mit dem Extrudergehäuse 8 verschraubt ist. In diesem Gehäuse 7 sind zwei Benetzungswalzen 5, 6, die einen zylindrischen Mantel und den gleichen Durchmesser aufweisen, drehbar gelagert. Die Drehachsen dieser Benetzungswalzen 5, 6, die zur Benetzungseinrichtung 4 gehören, liegen parallel zur Längsachse der beiden Schnecken 11, 12. Sie sind durch separate, regelbare Motorantriebe in gegenläufigem Drehsinn angetrieben, wobei die Drehzahl der Benetzungswalze 5 etwas unterschiedlich zur Drehzahl der Benetzungswalze 6 eingestellt ist, um einen gewissen Grad an Friktion im Walzenspalt der nahe beieinander liegenden Benetzungswalzen 5, 6 zu erzeugen. Der Drehsinn der Benetzungswalzen 5, 6 und der Walzenspalt sind so eingerichtet, daß ein nicht näher dargestellter Strang von Endlosfasern eines Glasfasermaterials, der in Richtung des eingezeichneten Pfeils über der Benetzungseinrichtung 4 zugeführt wird, gezielt durch die Öffnung 3 in den Extrusionsraum 2 hineingefördert wird. Um die Zuführung des Glasfasermaterials kontrolliert zu bewerkstelligen, sind oberhalb der beiden Benetzungswalzen 5, 6 noch zwei Einzugswalzen 9, 10 drehbar angeordnet, wobei diese so angetrieben sind, daß der Strang der Endlosfasern geradlinig in den Walzenspalt der Benetzungswalzen 5, 6 eintritt. Damit im Walzenspalt zwischen den beiden Benetzungswalzen 5, 6 die gewünschte vollständige Benetzung mit dem fließfähigen Kunststoff des Matrixwerkstoffs stattfindet, muß der Mantel der Benetzungswalzen 5, 6 jeweils mit einer ausreichenden Menge an fließfähigem Kunststoff beschichtet werden, damit dieser den Walzenspalt hinreichend füllt. Hierzu ist in vorteilhafter Weiterbildung der Erfindung jeweils ein Zweigkanal 13, 14 vorgesehen, der in nicht dargestellter Weise an einer Stelle, wo bereits fließfähiger Kunststoff im Extrusionsraum 2 vorhanden ist, aus dem Extrusionsraum 2 abzweigt und durch das Extrudergehäuse 8 und durch das Gestell 7 hindurch bis zum Mantel der jeweiligen Benetzungswalze 5, 6 führt und dort offen endet. Dadurch kann ein Teilstrom des fließfähigen Kunststoffs aus dem Extrusionsraum 2 abgezweigt und bis zu den Benetzungswalzen 5, 6 geführt werden. Am Mantel der Benetzungswalzen 5, 6 tritt der fließfähige Kunststoff aus, d.h. er ergießt sich in den Spalt zwischen der Mantelfläche der Benetzungswalzen 5, 6 und der entsprechenden zylinderförmigen Ausnehmung im Gestell 7, in der die beiden Benetzungswalzen 5, 6 jeweils laufen. Dadurch verteilt sich der fließfähige Kunststoff in gleichmäßiger Dicke bei ständiger Drehung der beiden Benetzungswalzen 5,6 auf deren Mantel. Die Materialzufuhr durch die beiden Zweigkanäle 13; 14 ist so bemessen, daß der Walzenspalt zwischen den beiden Benetzungswalzen 5, 6 bei der Durchleitung des Strangs der Endlosfasern ausreichend gefüllt ist.
In Folge der Faktion und der Quetschvorgänge im Walzenspalt kommt es zu einer sehr intensiven Kontaktbildung zwischen dem Fasermaterial und dem Kunststoff des Matrixwerkstoffs, so daß eine vollständige Benetzung der Oberfläche des Fasermaterials gewährleistet wird. Das überschüssige Material des fließfähigen Kunststoffs wird von den Benetzungswalzen 5, 6 mitgenommen und kann problemlos an einer entsprechenden Kante im Inneren des Gestells 7 abgestreift werden, so daß es in die Öffnung 3 am Extrudergehäuse 8 hineinfällt und zwangsläufig mit dem in die Öffnung 3 eingeführten Fasermaterial von den Schnecken 11, 12 des Extruders mitgenommen wird und sich wieder mit dem Hauptstrom des Kunststoffs vermischt. Das Fasermaterial kann über die Einzugswalzen 9, 10 und die Benetzungswalzen 5, 6 in sehr gleichmäßiger Weise in den Extrusionsraum 2 hineingefördert werden. Durch die Vermischungstätigkeit der beiden Extruderschnecken 11, 12 kommt es zwar immer wieder zu Brüchen im Fasermaterial. Da die Mischstrecke für eine gleichmäßige Verteilung des Fasermaterials im Matrixwerkstoff des fließfähigen Kunststoffs aber relativ kurz sein kann, bleiben die endlos zugeführten Fasern überwiegend in einer vergleichsweise großen Länge erhalten. Der Anteil an Kurzfasern ist erheblich geringer als bei den bisher bekannten Verfahren. Da die erfindungsgemäße Vorrichtung lediglich aus sehr einfach herstellbaren Einzelteilen besteht und die erforderlichen Drehantriebe preisgünstig erhältlich sind, ist der Gesamtaufwand für die Erstellung einer erfindungsgemäßen Vorrichtung sehr gering.

### Bezugszeichenliste:

- 1: Schneckenextruder
- 2: Extrusionsraum
- 3: Öffnung
- 4: Benetzungseinrichtung
- 5: Benetzungswalze
- 6: Benetzungswalze
- 7: Gehäuse
- 8: Extrudergehäuse
- 9: Einzugswalze
- 10: Einzugswalze
- 11: Schnecke
- 12: Schnecke
- 13: Zweigkanal
- 14: Zweigkanal

## Patentansprüche

1. Verfahren zur Herstellung eines Compounds aus einem fließfähigen Kunststoff und einer festen Fasereinlage aus einem Verstärkungsmaterial, insbesondere Glasfasern, durch Extrudieren des Kunststoffs aus einem Extrusionsraum heraus, wobei dem Kunststoff im Extrusionsraum Endlosfasem des Verstärkungsmaterials, die zuvor bereits mit dem Kunststoff benetzt worden sind. zugeführt und die Endlosfasem mit dem Kunststoff im Extrusionsraum vermischt werden,
**dadurch gekennzeichnet,**
**daß** die Endlosfasem zur Benetzung mit dem Kunststoff durch einen Walzenspalt geführt werden, der zwischen einem Paar in gegenläufigem Drehsinn angetriebener Benetzungswalzen gebildet ist, deren Oberfläche eine Beschichtung aus dem fließfähigen Kunststoff in einer Dicke aufweist, die zur ständigen Füllung des Walzenspaltes mit dem Kunststoff ausreicht,
und **dass** derAusgang der Benetzungseinrichtung in Transportrichtung in Verbindung mit einer seitlichen Öffnung des Extruders steht.

2. Verfahren nach Anspruch 1,
**dadurch gekennzeichnet,**
**daß** der fließfähige Kunststoff zur Beschichtung der Benetzungswalzen dem Extrusionsraum an einer Stelle entnommen wird, an der der fließfähige Kunststoff noch nicht mit den Fasern vermischt ist.

3. Verfahren nach einem der Ansprüche 1 bis 2,
**dadurch gekennzeichnet,**
**daß** die Zuführung der benetzten Endlosfasern in den Extrusionsraum im Bereich der Mischzone eines Mehrschneckenextruders, insbesondere eines Doppelschneckenextruders, erfolgt.

4. Verfahren nach einem der Ansprüche 1 bis 3,
**dadurch gekennzeichnet,**
**daß** als fließfähiger Kunststoff ein plastifizierter Thermoplast eingesetzt wird.

5. Verfahren nach einem der Ansprüche 1 bis 4,
**dadurch gekennzeichnet,**
**daß** die Benetzungswalzen zur Erzeugung einer Friktion im Walzenspalt jeweils
mit voneinander verschiedenen Walzenumfangsgeschwindigkeiten betrieben werden.

6. Verfahren nach Anspruch 5,
**dadurch gekennzeichnet,**
**daß** die unterschiedlichen Walzenumfangsgeschwindigkeiten durch Einstellung unterschiedlicher Drehzahlen der Benetzungswalzen eingestellt werden.

7. Verfahren nach einem der Ansprüche 1 bis 6,
**dadurch gekennzeichnet,**
**daß** die Endlosfasern dem Walzenspalt der Benetzungswalzen über ein Paar aufeinander abrollender Einzugswalzen kontrolliert zugeführt werden.

8. Vorrichtung zur Durchführung des Verfahrens nach Anspruch 1,
mit einem Schneckenextruder (1), dessen von einem Extrudergehäuse (8) umgebener Extrusionsraum (2) zusätzlich zur Eintrittsöffnung und zur Austrittsöffnung für den zu extrudierenden Kunststoff eine seitliche Öffnung (3) für die Zufuhr von endlosem Fasermaterial aufweist, und mit einer Benetzungseinrichtung (4) für das zuzuführende Fasermaterial, deren Ausgang in Transportverbindung mit der seitlichen Öffnung (3) steht,
**dadurch gekennzeichnet,**
- **daß** die Benetzungseinrichtung (4) mindestens ein Paar zusammenwirkender Benetzungswalzen (5, 6) aufweist,
- **daß** die Benetzungswalzen (5, 6) gegensinnig drehend angetrieben sind,
- **daß** der zwischen den Benetzungswalzen (5, 6) bestehende Walzenspalt den Ausgang der Benetzungseinrichtung (4) bildet und
- **daß** im Bereich der Peripherie der Benetzungswalzen (5, 6) eine Zuführung für fließfähigen Kunststoff in der Weise angeordnet ist, daß der Mantel der Benetzungswalzen (5, 6) während des Betriebs ständig mit dem fließfähigen Kunststoff beschichtet wird.

9. Vorrichtung nach Anspruch 8,
**dadurch gekennzeichnet,**
**daß** die Benetzungswalzen (5, 6) in einem umschließenden Gehäuse (7) gelagert sind, das fest mit dem Extrudergehäuse (8) verbunden ist.

10. Vorrichtung nach einem der Ansprüche 8 bis 9,
**dadurch gekennzeichnet,**
**daß** in dem Gestell (7) zusätzlich mindestens ein Paar gegensinnig drehend angetriebener Einzugswalzen angeordnet ist, über die die Endlosfasern des Fasermaterials kontrolliert in den Walzenspalt der Benetzungswalzen (5, 6) führbar sind.

11. Vorrichtung nach einem der Ansprüche 8 bis 10,
**dadurch gekennzeichnet,**
**daß** der Schneckenextruder (1) ein Mehrschneckenextruder, insbesondere ein Doppelschneckenextruder ist.

12. Vorrichtung nach Anspruch 11,
**dadurch gekennzeichnet,**
**daß** die Schnecken (11, 12) des Doppelschneckenextruders gleichsinnig drehend angetrieben sind.

13. Vorrichtung nach einem der Ansprüche 8 bis 12,
**dadurch gekennzeichnet,**
**daß** die Benetzungswalzen (5, 6) zur Erzeugung einer Friktion im Walzenspalt mit voneinander verschiedenen Umfangsgeschwindigkeiten antreibbar sind.

14. Vorrichtung nach Anspruch 13,
**dadurch gekennzeichnet,**
**daß** die Benetzungswalzen (5, 6) den gleichen Durchmesser aufweisen und ihre Drehantriebe in ihrer Drehzahl unabhängig voneinander regelbar sind.

15. Vorrichtung nach Anspruch 14,
**dadurch gekennzeichnet,**
**daß** die Drehantriebe der Benetzungswalzen (5, 6) separat voneinander ausgebildet sind.

16. Vorrichtung nach einem der Ansprüche 8 bis 15,
**dadurch gekennzeichnet,**
**daß** die Zuführung für den fließfähigen Kunststoff jeweils als Zweigkanal (13, 14) ausgebildet ist, der in Transportrichtung der Schnecken (11,12) vor der Öffnung (3) aus dem Extrudsionsraum (2) abzweigt und im unmittelbaren Nahbereich des Mantels der jeweils zugeordneten Benetzungswalze (5, 6) offen endet.

17. Vorrichtung nach einem der Ansprüche 8 bis 16,
**dadurch gekennzeichnet,**
**daß** die Öffnung (3) im Bereich der Mischzone des Schneckenextruders (1) angeordnet ist.

## Claims

1. Method for producing a compound from a flowable plastic and a firm fibre insert made of reinforcing material, particularly glass fibres, by extruding the plastic from an extrusion space, continuous fibres of the reinforcing material which have been already wetted with the plastic being fed into the plastic in the extrusion space, and the continuous fibres being mixed with the plastic in the extrusion space,
**characterised in that**,
in order to be wetted with the plastic, the continuous fibres are passed through a roller gap which is formed between a pair of wetting rollers driven in counter-rotation, the surface of which rollers has a coating of the flowable plastic of a thickness which is sufficient to keep the roller gap constantly filled up with the plastic,
and that the outlet of the wetting device is connected, in the conveying direction, to a lateral opening of the extruder.

2. Method as in Claim 1,
**characterised in that**
the flowable plastic for coating the wetting rollers is taken out of the extrusion space at a point where the flowable plastic has not yet been mixed with the fibres.

3. Method as in one of Claims 1 to 2,
**characterised in that** the feeding of the wetted continuous fibres into the extrusion space takes place in the area of the mixing zone of a multiple screw extruder, particularly a twin screw extruder.

4. Method as in one of Claims 1 to 3,
**characterised in that**
a plasticized thermoplastic is used as the flowable plastic.

5. Method as in one of Claims 1 to 4,
**characterised in that**,
in order to create a friction in the roller gap, each of the wetting rollers is driven at a different circumferential speed.

6. Method as in Claim 5,
**characterised in that**
the different circumferential speeds of the rollers are achieved by setting different revolution speeds of the wetting rollers.

7. Method as in one of Claims 1 to 6,
**characterised in that**
the continuous fibres are fed in a controlled manner into the roller gap of the wetting rollers by means of a pair of feed rollers which rotate towards each other.

8. Device for carrying out the method of Claim 1,
with a screw extruder (1), the extrusion space (2) of which is enclosed by an extruder casing (8) and has, in addition to the inlet opening and the outlet opening for the plastic being extruded, a lateral opening (3) for the supply of continuous fibre material, and with a wetting device (4) for the fibre material which is being fed in, the outlet of which wetting device is connected, as a conveyor, to the lateral opening (3),
**characterised in that**
- the wetting device (4) has at least one pair of cooperating wetting rollers (5, 6),
- the wetting rollers (5, 6) are driven in counter-rotation,
- the roller gap between the wetting rollers (5, 6) forms the outlet of the wetting device (4) and
- there is, in the area of the periphery of the wetting rollers (5,6), an inlet for flowable plastic, positioned in such a way that the outer casing of the wetting rollers (5, 6) is constantly coated with the flowable plastic during operation.

9. Device as in Claim 8,
**characterised in that**
the wetting rollers (5, 6) are mounted inside an enclosing casing (7) which is permanently fixed to the extruder casing (8).

10. Device as in one of Claims 8 to 9,
**characterised in that**,
in the stand (7), there is positioned additionally at least one pair of feed rollers driven in counter-rotation, by means of which the continuous fibres can be fed, in a controlled manner, into the roller gap of the wetting rollers (5, 6).

11. Device as in one of Claims 8 to 10,
**characterised in that**
the screw extruder (1) is a multiple screw extruder, in particular a twin screw extruder.

12. Device as in Claim 11,
**characterised in that**
the screws (11, 12) of the twin screw extruder are driven to rotate in the same direction.

13. Device as in one of Claims 8 to 12,
**characterised in that**
the wetting rollers (5, 6) can be driven at circumferential speeds which differ from each other in order to create a friction in the roller gap.

14. Device as in Claim 13,
**characterised in that**
the wetting rollers (5, 6) have the same diameter, and the revolution speed of their rotary drive units can be controlled independently of one another.

15. Device as in Claim 14,
**characterised in that**
the rotary drive units of the wetting rollers (5, 6) are separate from each other.

16. Device as in one of Claims 8 to 15,
**characterised in that**
the feed for the flowable plastic is, in each case, in the form of a branch channel (13, 14) which branches off, in the conveying direction of the screws (11, 12), in front of the opening (3) from the extrusion space (2), and which terminates as an opening in the immediate vicinity of the casing of the wetting roller (5, 6) to which it is allocated.

17. Device as in one of Claims 8 to 16,
**characterised in that**
the opening (3) is positioned in the area of the mixing zone of the screw extruder (1).

## Revendications

1. Procédé pour fabriquer une matière composite constituée d'une matière synthétique pouvant couler et d'une garniture de fibres solide en une matière de renforcement, en particulier des fibres de verre, par extrusion de la matière synthétique à partir d'un espace d'extrusion, des fibres sans fin de la matière de renforcement, qui ont été préalablement déjà mouillées par la matière synthétique, étant amenées à la matière synthétique dans l'espace d'extrusion, et les fibres sans fin étant mélangées avec la matière synthétique dans l'espace d'extrusion,
**caractérisé en ce que** les fibres sans fin pour le mouillage par la matière synthétique sont guidées à travers une fente de cylindres qui est formée entre une paire de cylindres de mouillage entraînés dans des sens de rotation opposés, dont la surface présente un revêtement en la matière synthétique pouvant couler en une épaisseur qui suffit pour remplir complètement la fente des cylindres avec la matière synthétique, et **en ce que** la sortie du dispositif de mouillage, dans la direction de transport, est en liaison avec une ouverture latérale de l'extrudeuse.

2. Procédé selon la revendication 1,
**caractérisé en ce que** la matière synthétique pouvant couler pour revêtir les cylindres de mouillage est prélevée de l'espace d'extrusion en un endroit au niveau duquel la matière synthétique pouvant couler n'est pas encore mélangée avec les fibres.

3. Procédé selon une des revendications 1 à 2,
**caractérisé en ce que** l'amenée des fibres sans fin mouillées dans l'espace d'extrusion est effectuée dans la zone de mélange d'une extrudeuse à plusieurs vis sans fin, en particulier d'une extrudeuse à vis sans fin double.

4. Procédé selon une des revendications 1 à 3,
**caractérisé en ce que**, comme matière synthétique pouvant couler, on utilise une matière thermoplastique plastifiée.

5. Procédé selon une des revendications 1 à 4,
**caractérisé en ce que** les cylindres de mouillage sont entraînés à chaque fois avec des vitesses périphériques différentes l'une de l'autre pour engendrer un frottement dans la fente des cylindres.

6. Procédé selon la revendication 5,
**caractérisé en ce que** les vitesses périphériques différentes des cylindres sont réglées par réglage de différentes vitesses de rotation des cylindres de mouillage.

7. Procédé selon une des revendications 1 à 6,
**caractérisé en ce que** les fibres sans fin sont amenées de façon contrôlée à la fente des cylindres de mouillage via une paire de cylindres d'amenée roulant l'un sur l'autre.

8. Dispositif pour la mise en oeuvre du procédé selon la revendication 1, comportant une extrudeuse à vis sans fin (1), dont l'espace d'extrusion (2) entouré par un carter d'extrudeuse (8), en plus d'une ouverture d'entrée et d'une ouverture de sortie pour la matière synthétique devant être extrudée, présente une ouverture latérale (3) pour l'amenée d'une matière en fibres sans fin, et comportant un dispositif de mouillage (4) pour la matière en fibres devant être amenée, dont la sortie est en liaison de transport avec l'ouverture latérale (3),
**caractérisé en ce que**
- le dispositif de mouillage (4) présente au moins une paire de cylindres de mouillage coopérants (5, 6),
- les cylindres de mouillage (5, 6) sont entraînés en tournant en sens opposés,
- la fente existant entre les cylindres de mouillage (5, 6) forme la sortie du dispositif de mouillage (4), et
- dans la zone de la périphérie des cylindres de mouillage (5, 6), il est agencé une amenée pour de la matière synthétique susceptible de couler de façon que l'enveloppe des cylindres de mouillage (5, 6) soit revêtue, pendant le fonctionnement, continuellement de la matière synthétique susceptible de couler.

9. Dispositif selon la revendication 8,
**caractérisé en ce que** les cylindres de mouillage (5, 6) sont montés dans un boîtier (7) les entourant, qui est solidaire du carter (8) de l'extrudeuse.

10. Dispositif selon une des revendications 8 à 9,
**caractérisé en ce que**, dans le boîtier (7), il est agencé de façon supplémentaire au moins une paire de cylindres d'amenée entraînés en tournant en sens inverses, grâce auxquels les fibres sans fin de la matière en fibres peuvent être guidées de façon contrôlée dans la fente des cylindres de mouillage (5, 6).

11. Dispositif selon une des revendications 8 à 10,
**caractérisé en ce que** l'extrudeuse à vis sans fin (1) est une extrudeuse à plusieurs vis sans fin, en particulier une extrudeuse à vis sans fin double.

12. Dispositif selon la revendication 11,
**caractérisé en ce que** les vis sans fin (11, 12) de l'extrudeuse à vis sans fin double sont entraînées en tournant dans le même sens.

13. Dispositif selon une des revendications 8 à 12,
**caractérisé en ce que** les cylindres de mouillage (5, 6) peuvent être entraînés à des vitesses périphériques différentes l'une de l'autre pour engendrer un frottement dans la fente des cylindres.

14. Dispositif selon la revendication 13,
**caractérisé en ce que** les cylindres de mouillage (5, 6) présentent le même diamètre et les vitesses de rotation de leurs entraînements en rotation peuvent être réglées indépendamment l'une de l'autre.

15. Dispositif selon la revendication 14,
**caractérisé en ce que** les entraînements en rotation des cylindres de mouillage (5, 6) sont réalisés de façon séparée l'un de l'autre.

16. Dispositif selon une des revendications 8 à 15,
**caractérisé en ce que** l'amenée pour la matière synthétique susceptible de couler est réalisée, à chaque fois, comme canal de dérivation (13, 14), qui dérive, dans la direction de transport des vis sans fin (11, 12), avant l'ouverture (3) hors de l'espace d'extrusion (2) et s'achève en étant ouvert dans la zone à proximité directe de l'enveloppe du cylindre de mouillage (5, 6) à chaque fois associé.

17. Dispositif selon une des revendications 8 à 16,
**caractérisé en ce que** l'ouverture (3) est agencée dans la zone de mélange de l'extrudeuse à vis sans fin (1).
